# EUROPÄISCHE PATENTSCHRIFT

(11) **EP 1 543 890 B1**
(45) Veröffentlichungstag und Bekanntmachung des Hinweises auf die Patenterteilung: **14.06.2006**
(21) Anmeldenummer: 04029820.0
(22) Anmeldetag: 16.12.2004
(51) Int. Cl.: B09B 1/00

(54) **Verfahren zum Schliessen von Deponien und Lagerflächen für Rückstände**
Method for covering landfills and waste storage surfaces
Procédé pour couvrir des décharges et des surfaces de stockage de déchets

(30) Priorität: 17.12.2003 DE 10359425
(43) Veröffentlichungstag der Anmeldung: 22.06.2005
(73) Patentinhaber: DB Netz AG, 60426 Frankfurt am Main (DE)
(72) Erfinder: Eifert, Hans-Georg, 45329 Essen (DE)
(74) Vertreter: Zinken-Sommer, Rainer

(56) Entgegenhaltungen:
- DE-A1- 4 211 667
- DE-A1- 10 001 276

## Beschreibung

Die Erfindung betrifft ein Verfahren zum Schließen von Deponien und Lagerflächen für Rückstände sowie zur Herstellung von standortdifferenzierten Schichtenaufbauten für Oberflächenabdichtungen zur Schließung von Deponien (DK 0, DK I und DK II) und Altablagerungen. Dabei wird eine Mehrschichtenabdeckung hergestellt.
Das Verfahren soll vorrangig für Altdeponien und Altablagerungen zum Einsatz kommen. Hierunter sind vorhandene zugelassene und/oder betriebene Deponien und Lagerflächen zu verstehen, die grundsätzlich derzeit und zukünftig weiter betrieben werden dürfen. Selbstverständlich kann das Verfahren auch für alle anderen Deponien der Deponieklassen (DK) 0, 1 und 2 angewandt werden, wobei unter DK 0 - Deponien vorrangig für Inertabfälle, unter DK 1 - Deponien vorrangig mit einem sehr geringen organischen Anteil und einer sehr geringen Schadstofffreisetzung im Auslaugversuch und unter DK 2 - Deponien vorrangig für Abfälle mit einem höheren organischen Anteil als DK 1 und einer höheren Schadstofffreisetzung im Auslaugversuch als DK 1 und der Notwendigkeit von zusätzlichen Abdichtmaßnahmen an den Untergrund verstanden wird.

Zur Schließung von Deponien und Lagerflächen sind verschiedene Mehrschichtensysteme bekannt. Dabei werden in der Regel auf den Deponiekörper Ausgleichs-, Abdicht-und Rekultivierungsschichten aus den verschiedensten Materialien und in den verschiedensten Dicken aufgebracht.

Die DE-PS 101 20 107 C1 beschreibt ein Verfahren und eine Vorrichtung zur verbesserten Bewirtschaftung von Deponien, bei dem auf die planierte Oberfläche eines Versickerungsfeldes des Deponiekörpers eine Dränageschicht aus Kies/Schotter mit einer Körnung 32/56 und einer Dicke von etwa 40 cm sowie Dränagerohren aufgebracht wird, auf die ein Geotextil angeordnet wird, welches mit einer Profilierungsschicht aus Erde und Recyclingmaterial bedeckt und einer Folie oder anderen Abdeckung abgedeckt wird. Die Deponie weist ein aufwendiges Entgasungs- und Oberflächenwasserabführsystem auf.

Aus der DE-OS 199 45 516 A1 ist ein Verfahren zum Herstellen oder Sanieren oder Abdichten von Deponien bekannt, welches verfahrensmäßig vorhandenes Deponiematerial durch Trennung in biologisch abbaubares und nicht abbaubares Material separiert, wobei das biologisch abbaubare Material einer aeroben und ggf. einer zusätzlich anaeroben Behandlung wie Kompostierung und/oder Vergärung unterzogen wird. Danach erfolgt eine Trennung durch Siebung in ein Feinsubstrat und ein Grobsubstrat, wobei hiermit neue Schichten einer Deponie erstellt werden. Die herzustellende Deponie stellt ein Mehrschichtsystem dar, welches sich aus einer Basisdichtung, dem Deponiekörper und einer Oberflächendichtungsschicht zusammensetzt, wobei die Basisdichtung und die Oberflächendichtungsschicht zumindest teilweise aus dem im Vorfeld gewonnenen und abgetrennten Feinsubstrat gebildet werden. Die als letztes aufzubringende Rekultivierungsschicht besteht zumindest teilweise aus dem gewonnenem Grob-oder dem Feinsubstrat mit einer Korngröße von 10 mm.

Beiden Verfahren ist gemeinsam, dass ihre Umsetzung sehr kostspielig und außerordentlich aufwendig gestaltet ist. Die Schichtenaufbauten sind zudem bekannter Stand der Technik. Bei Der DE-OS 199 45 516 A1 muss zudem die gesamte Altdeponie aufgenommen, getrennt und zumindest teilweise separat behandelt werden.

Aus der DE 197 33 740 C2 ist eine wasserdurchtritts-reduzierende Oberflächenabdeckung von Ablagerungen, wie Deponien, Halden, Altlasten und dgl. bekannt, wobei oberhalb der Ablagerungen ein mattenartiges, flächiges Wassersperrgebilde aus Vlies-und Gewebetragschichten sowie feinstkörnige Gemische mit quellfähigen Tonmineralien, angeordnet ist. Die Abdeckung erfolgt in einer mehrschichtigen Bauweise, wobei als erste Schicht auf den Ablagerungen eine Ausgleichsschicht aus Recyclingstoffen danach als Wassersperrschicht eine Kalzium-Bentonitmatte, als obere Feuchtespeicherschicht eine feinkörnige Diabasabsiebung, anschließend als Entwässerungs- oder Drainageschicht Muschelkalkschotter sowie abschließend eine Oberflächenabdeckung vorgenommen wird. Es werden keinerlei Angaben zu den einzelnen Mengenverhältnissen gemacht. Weiterhin bestehen alle Schichten nur aus einer Komponente und nicht aus Mischungen verschiedener Bestandteile. Spezielle Abprodukte kommen als Abdeckungsmaterialien nicht zur Anwendung.

Die DE 197 20 520 A1 beschreibt ein temporäres Ein-Schicht-Deponie-Abschirmsystem, bei welchem in einem ersten Schritt aus natürlichen, vegetabilen und anthropogenen Inputmaterialien, Sekundärrohstoffen und Recyclingmaterialien nach einer definierten Mix-Rezeptur ein homogenes begrünungsfähiges Substrat hergestellt wird, welches in einem zweiten Schritt in einer oder mehreren Lagen auf die Deponie aufgebracht wird. Als Inputmaterial kommen z. B. Klärschlämme, Schlämme, Sedimente, mineralische Strukturmaterialien, Kraftwerksaschen, Schlacken, Recyclingmaterial Kunststoff- und Baustoffschredder zum Einsatz. Die Anteile dieser Stoffe an der Rezeptur sind mit nicht nacharbeitbaren Anteilen in Höhe von > 1 M.-% versehen. Damit ist dieses System nicht in der Praxis einsetzbar.

Es ist ein mineralisches Oberflächen- und Zwischenabdichtsystem für Deponien bekannt, bei dem auf die Altlast eine Profilierungsschicht und eine Dichtungsschicht aufgebracht wird, auf der eine Drainagematte und eine Rekultivierungsschicht sich befindet (DE 100 01 276 A1). Die Rekultivierungsschicht kann dabei aus bentonithaltigen Gießereisanden und/oder Klärschlamm bestehen. Es werden keine eisenbahnspezifischen Abprodukte oder Reststoffe verwendet.

Die DE 101 38 539 A1 beschreibt eine Vorrichtung zur Abdichtung von Deponien, wobei eine mineralische Dichtungsschicht verwendet wird, die mit einer wasserdurchlässigen Schicht versehen ist. Auf der Dichtungsschicht sind Dichtungselemente aufgebracht, die aus Netzen, Vliesen oder Folien bestehen. Zur stofflichen Zusammensetzung der mineralischen Dichtungsschicht ist nichts ausgeführt. Die Verwendung von Vliesen, Matten und Folien als Dichtungselemente ist aus der Fachliteratur seit geraumer zeit als bekannt anzusehen.

Aus der DE 202 03 131 U1 ist ein Dichtungsaufbau für eine Deponie von Abfällen bekannt, wobei auf einen Deponiekörper eine Trag- und Ausgleichsschicht und darauf eine Dichtung aufgebracht wird. Die Trag- und Ausgleichsschicht besteht aus gebundenem, verfestigten, immobilisierten Bodenmaterial, welches sich aus Aschen, Schlacken, Emulsionen, Harzen, Kunststoffen oder Restsoffen aus dem Metall-Recycling zusammensetzen kann. Zu Gemischanteilen ist nichts ausgeführt. Es werden keine eisenbahnspezifischen Abprodukte oder Reststoffe verwendet.

Weiterhin sind als Deponieabdeckungen die DE 195 40 387 A1, DE202 03 130 U1, De 200 15 430 U1, DE 298 07 878 U1 und die DE 42 18 216 C1 bekannt, die ebenfalls jedoch kein Mehrschichtsystem unter ausschließlicher Verwendung eisenbahnspezifischer Abprodukte und Reststoffe beschreiben.

Aufgabe der Erfindung ist es, ein Verfahren zu entwickeln, welches die Nachteile des Standes der Technik beseitigt und wenig aufwendig gestaltet ist. Darüber hinaus soll der vorhandene Deponiekörper nicht aufgenommen und nicht gesondert behandelt werden. Die Abdeckung der Deponie soll weitgehend aus Abprodukten bestehen, die keiner Gefährdungsklasse zuzuordnen sind. Es sollen ausschließlich eisenbahnspezifische Abprodukte und Reststoffe verwendet werden.

Dies wird erfindungsgemäß dadurch erreicht, dass
auf einem vorhanden Deponiekörper eine Abdeckung mit nachfolgend genannten Schichtenaufbau sowie den angegebenen Materialzusammensetzungen aufgebracht wird:
- Profilierungs- und Ausgleichsschicht
   - Mächtigkeit bis zu 1,5 m
   - lagenweiser Einbau mit einer Schichtdicke bis zu 0,5 m
   - 25 % bis 45 % Anteile Schotter einer Korngröße von 0 mm bis 65 mm und 35 % bis 55% Anteile gebrochener Betonschwellen einer Korngröße von 0 mm bis 65 mm und 20 % bis 30 % Anteile Splitt einer Korngröße von 2 mm bis 8 mm und 0,1 % bis 30 % Anteile Feingut einer Korngröße von 0 mm bis 8 mm
- Bodenkörper
   - Mächtigkeit bis zu 3,0 m
   - lagenweiser Einbau mit einer Schichtdicke von bis zu 0,30 m
   - 0,1 % bis 25 % Anteile Schotter einer Korngröße von 0 mm bis 65 mm und 0,1 % bis 25 % Anteile gebrochener Betonschwellen einer Korngröße von 0 mm bis 65 mm und 20 % bis 40 % Anteile Splitt einer Korngröße von 2 mm bis 8 mm und 35 % bis 45 % Anteile Feingut einer Korngröße von 0 mm bis 8 mm (kornabgestuftes Material)
- Rekultivierungsschicht
   - Mächtigkeit bis zu 0,5 m
   - Organikanteil max. 5,0 %
   - 0,1 % bis 10 % Anteile Schotter einer Korngröße von 0 mm bis 65 mm und 0,1 % bis 10 % Anteile gebrochener Betonschwellen einer Korngröße von 0 mm bis 65 mm und 20 % bis 40 % Anteile Splitt einer Korngröße von 2 mm bis 8 mm und 45 % bis 55 % Anteile Feingut einer Korngröße von 0 mm bis 8 mm,
   wobei alle Schichten aus einem Gemisch von jeweils in der Korngröße und den Anteilen variabel an die Gegebenheit anpassbaren Materialien bestehend aus
   - Schotter eines Bahnkörpers
   - gebrochenen Betonschwellen einer Schienenkonstruktion
   - Splittanteilen eines Schotterrecyclungsprozesses und
   - Feingutanteilen des Schotterrecyclingsprozesses
   hergestellt werden.

Damit wird erstmals eine Deponieabdeckung ausschließlich aus Bestandteilen erstellt, die beim Recycling des Schotters aus Herkunftsbereichen der Deutschen Bahn und beim Recycling von ausgebauten und gebrochenen Betonschwellen des Oberbaus von Schienenwegen entstehen. Alle o. g. eisenbahnspezifischen Abprodukte und Reststoffe kommen in der speziellen Gemischvariante schichtenweise unterschiedlich zur Abdeckung von Deponien, insbesondere von einfachen Hausmülldeponien der Klasse 0-III zum Einsatz. Die erfindungsgemäße Lösung hat den weiteren Vorteil, dass durch die unterschiedlichen Schichten und Schichtenzusammensetzungen aus speziellen eisenbahntypischen Materialien ohne zusätzlichen Aufwand eine Anpassung an die örtlichen Gegebenheiten im standorttypischen Sinne (Geländegefälle, Oberflächengestaltung u.a.) sehr gut möglich ist.

Ein weiterer Vorteil dieser Lösung ist, dass die erfindungsgemäße Abdeckung ohne Probleme an die jeweiligen genehmigungsrechtliche Bestimmungen (Planfeststellung, Plangenehmigung) für jeden speziellen Standort anpassbar ist.

Die erfindungsgemäße Kombination von Materialien aus ausschließlich eisenbahnspezifischer Nutzung zur Verwendung als Abdeckung für Deponien ist zudem sehr preiswert und erfüllt alle gesetzlichen Anforderungen an die Durchlässigkeit/Dichtheit.

Es ist möglich, in die Ausgleichsschicht kontaminiertes Material einzubringen, wenn die genehmigungsrechtlichen Zulassungen eingehalten werden. Als kontaminiertes Material sind verunreinigter Schotter bzw. Schotterbestandteile und/oder Splitte und/oder Feinstmaterialien einsetzbar, dies im genehmigungsrechtlichen Sinne abhängig im Einzelfall von landestypischen Verordnungen.

In Abhängigkeit der vorhandenen Materialeigenschaften (z. B. Suffosionseigenschaften, Erosionsbeständigkeit) besteht die Möglichkeit, zwischen dem Bodenkörper sowie der Profilierungs- und Ausgleichsschicht zusätzlich ein filterstabiles Geotextil und/oder eine Dränageschicht und/oder eine Dichtungsschicht anzuordnen. Die Dichtungsschicht ist in einem solchen Falle immer mit einem Flächenfilter zu kombinieren.

Die Dränageschicht wird als Flächenfilter unter dem Geotextil in einer Dicke von bis 0,3 m eingebaut.

Die Dichtungsschicht wird in einer Dicke von bis 0,5 m unterhalb des Flächenfilters vorzugsweise in einem Zweikomponentensystem aus einem Dickschichtsystem und einem Dünnschichtsystem eingebaut.

Unter einem Dickschichtsystem wird in Abhängigkeit der Deponieklasse z. B. eine mineralische Dichtung in einer Kombination mit einer Kunststoffdichtungsbahn verstanden.

Als Dünnschichtsystem kommt eine Kombination aus einer Bentonitmatte (Verbundwerkstoffe aus Geweben und Bentonit), auch als geosynthetische Tondichtungsbahnen GTD bezeichnet, als Dichtungselement mit einer Dränmatte als Entwässerungselement und ggf. einer weiteren Dränmatte als Entgasungselement in Frage. Auch kann die Bentonitmatte mit anderen Elementen der O-berflächenabdichtung/-abdeckung wie z. B. Kunststoffdichtungsbahnen kombiniert werden.

Obwohl die im Folgenden beschriebenen Schichten aus einer gleichen Materialkombination hergestellt werden, weist jede Schicht unterschiedliche Gemischzusammensetzungen bezüglich der Anteile und der verwendeten Korngrößen auf. Diese werden speziell an die örtlichen Gegebenheiten der jeweilige Deponie und deren Deponieklasse angepasst.

Die Dränageschicht wird aus 50 % bis 100 % Anteilen Schotter einer Korngröße von 16 mm bis 32 mm oder 8 mm bis 16 mm und 0,1 % bis 50 % Anteilen gebrochener Betonschwellen einer Korngröße von 16 mm bis 32 mm oder 8 mm bis 16 mm und 0,1 % bis 10 % Anteilen Splitt einer Korngröße von 2 mm bis 8 mm und 0,1 % bis 5 % Anteilen Feingut einer Korngröße von 0 mm bis 8 mm hergestellt.

Die Dichtungsschicht wird aus 0,1 % bis 5 % Anteilen Schotter einer Korngröße von 0 mm bis 65 mm und 0,1 % bis 5 % Anteilen gebrochener Betonschwellen einer Korngröße von 0 mm bis 65 mm und 0,1 % bis 30 % Anteilen Splitt einer Korngröße von 2 mm bis 8 mm und 60 % bis 100 % Anteilen Feingut einer Korngröße von 0 mm bis 8 mm (kornabgestuftes Material) hergestellt.

Beispielsweise wird bei DK 0 die Rekultivierungsschicht aus 0,1 % bis 10 % Anteilen Schotter einer Korngröße von 0 mm bis 65 mm und 0,1 % bis 10 % Anteilen gebrochener Betonschwellen einer Korngröße von 0 mm bis 65 mm und 20 % bis 40 % Anteilen Splitt einer Korngröße von 2 mm bis 8 mm und 45 % bis 55 % Anteilen Feingut einer Korngröße von 0 mm bis 8 mm hergestellt.

Bei DK 1 wird die Dichtungsschicht aus 0,1 % bis 5 % Anteilen Schotter einer Korngröße von 0 mm bis 65 mm und 0,1 % bis 5 % Anteilen gebrochener Betonschwellen einer Korngröße von 0 mm bis 65 mm und 0,1 % bis 30 % Anteilen Splitt einer Korngröße von 2 mm bis 8 mm und 60 % bis 100 % Anteilen Feingut einer Korngröße von 0 mm bis 8 mm hergestellt.

Die Dränageschicht wird aus 50 % bis 100 % Anteilen Schotter einer Korngröße von 16 mm bis 32 mm oder 8 mm bis 16 mm und 0,1 % bis 50 % Anteilen gebrochener Betonschwellen einer Korngröße von 16 mm bis 32 mm oder 8 mm bis 16 mm und 0,1 % bis 10 % Anteilen Splitt einer Korngröße von 2 mm bis 8 mm und 0,1 % bis 5 % Anteilen Feingut einer Korngröße von 0 mm bis 8 mm hergestellt.

Die Rekultivierungsschicht wird aus 0,1 % bis 10 % Anteilen Schotter einer Korngröße von 0 mm bis 65 mm und 0,1 % bis 10 % Anteilen gebrochener Betonschwellen einer Korngröße von 0 mm bis 65 mm und 20 % bis 40 % Anteilen Splitt einer Korngröße von 2 mm bis 8 mm und 45 % bis 55 % Anteilen Feingut einer Korngröße von 0 mm bis 8 mm hergestellt.

Bei DK 2 wird die Dichtungsschicht zweilagig aus 0,1 % bis 5 % Anteilen Schotter einer Korngröße von 0 mm bis 65 mm und 0,1 % bis 5 % Anteilen gebrochener Betonschwellen einer Korngröße von 0 mm bis 65 mm und 0,1 % bis 30 % Anteilen Splitt einer Korngröße von 2 mm bis 8 mm und 60 % bis 100 % Anteilen Feingut einer Korngröße von 0 mm bis 8 mm vorzugsweise in Kombination mit einer Kunststoffdichtungsbahn hergestellt.

Die Dränageschicht wird aus 50 % bis 100 % Anteilen Schotter einer Korngröße von 16 mm bis 32 mm oder 8 mm bis 16 mm und 0,1 % bis 50 % Anteilen gebrochener Betonschwellen einer Korngröße von 16 mm bis 32 mm oder 8 mm bis 16 mm und 0,1 % bis 10 % Anteilen Splitt einer Korngröße von 2 mm bis 8 mm und 0,1 % bis 5 % Anteilen Feingut einer Korngröße von 0 mm bis 8 mm hergestellt.

Die Rekultivierungsschicht wird aus 0,1 % bis 10 % Anteilen Schotter einer Korngröße von 0 mm bis 65 mm und 0,1 % bis 10 % Anteilen gebrochener Betonschwellen einer Korngröße von 0 mm bis 65 mm und 20 % bis 40 % Anteilen Splitt einer Korngröße von 2 mm bis 8 mm und 45 % bis 55 % Anteilen Feingut einer Korngröße von 0 mm bis 8 mm hergestellt.

In die Rekultivierungsschicht können zudem kompostierte Klärschlämme und/oder sonstige Kompostanteile eingemischt werden. Dies fördert die Begrünung zusätzlich. Die Höhe der Rekultivierungsschicht ist bei der erfindungsgemäßen Lösung jedoch nicht mehr maßgebend für die gewählte Vegetation und zur Vermeidung der Durchwurzelung der darunter angeordneten Geotextilien, weil erfindungsgemäß hierfür der bis zu einer Mächtigkeit von 3,0 m zu erstellende Bodenkörper ausreichend sorgt.

Darüber hinaus gewährt die speziell an die örtlichen Gegebenheiten jeweils angepasste Gemischzusammensetzung der einzelnen Schichten eine optimale Möglichkeit zur wirkungsvollen Abdeckung der Deponie oder der Lagerfläche.

Die Abdeckung wird nahezu ausschließlich aus Materialien hergestellt, die als nicht wieder verwertbare Restmaterialien bei der Aufbereitung von Altschotter und beim Brechen nicht aufarbeitungsfähiger Betonschwellen anfallen. Mit der Verwendung dieser Restmaterialien in der Deponieabdeckung reduzieren sich sowohl deren Entsorgungskosten als auch die Kosten für die Beschaffung von neuen Baumaterialien zur Herstellung der Abdeckung. Dies eröffnet die Möglichkeit, Deponien kostengünstig zu schließen. Voraussetzung ist ein funktionierendes Materialstrommanagement, bei dem über einen längeren Zeitraum Bestand und Bedarf abgeglichen werden.

Die Erfindung wird nachstehend anhand eines Ausführungsbeispiels näher erläutert.

Dabei zeigt:

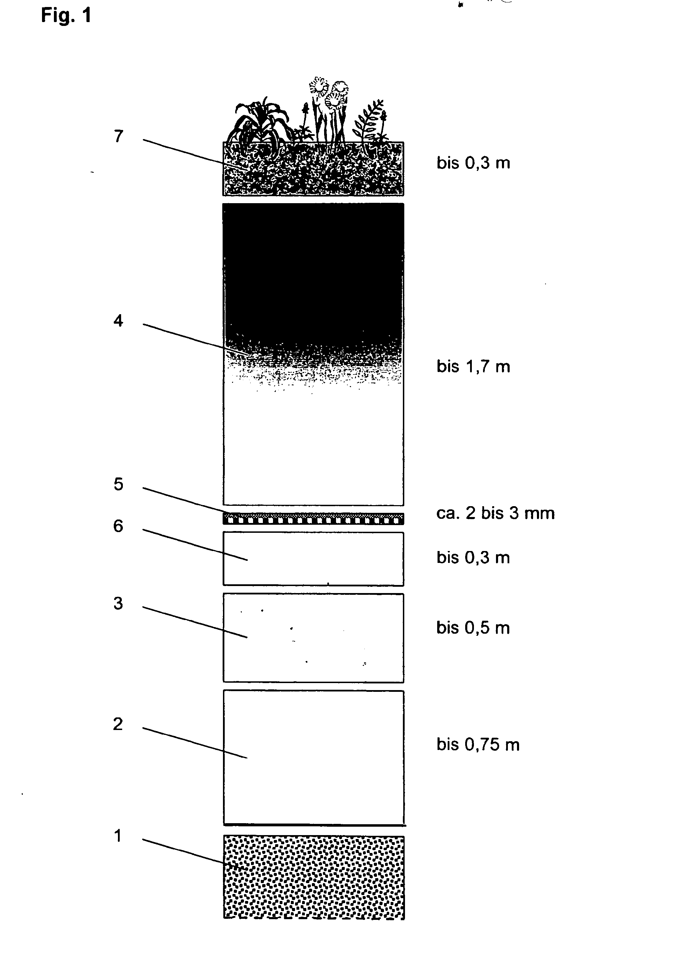

- Figur 1 - den Schichtenaufbau der Deponieabdeckung bzw. der Abdeckung der Lagerfläche im Querschnitt

Die Profilierungs- und Ausgleichsschicht 2 wird oberhalb des Deponiekörpers 1 angeordnet und dient dem Ausgleich von groben Unebenheiten des Deponiekörpers 1. Auf der Profilierungs- und Ausgleichsschicht 2 wird wahlweise nach örtlicher Situation die sich aus einem Dickschichtsystem und einem Dünnschichtsystem zusammensetzende Dichtungsschicht 3 oder der Bodenkörper 6 angeordnet. Dies entscheidet sich nach folgenden Kriterien:
- Deponieklasse bzw.
- der von der Altablagerung ausgehenden Gefährdung.

Im Falle der Notwendigkeit des Anordnens einer Dichtungsschicht 3 ist hiermit automatisch auch die Kombination dieser Schicht mit einer als Flächenfilter ausgeführten Dränageschicht 4 verbunden, auf welcher bei Bedarf ein filterstabiles Geotextil 5 verlegt wird. Wird ein Geotextil 5 eingebaut, folgt darauf der Bodenkörper 6. Die Bemessung der Schichtdicke des Bodenkörpers 6 erfolgt in Abhängigkeit der Zielfunktion des Schichtenaufbaus der abzudeckenden Deponie oder Lagerfläche entweder als Wasserhaushaltsschicht in einer Schichtdicke des Bodenkörpers 6 bis 3,0 m oder als Bodenbedeckung oberhalb der Dränageschicht 4 (Flächenfilter) in einer Schichtdicke bis 0,3 m. Der Bodenkörper 6 übernimmt dabei die Funktion eines Speicherkörpers und stellt den Wurzelraum dar.

Oberhalb des Bodenkörpers wird die begrünungsfähige Rekultivierungsschicht 7 angeordnet. Der erforderliche Anteil an organischen Stoffen wird durch die Beimischung kompostierter Klärschlämme oder sonstiger Komposter erreicht. Die Schichtdicke beträgt in der Regel bis 0,50 m, wovon allerdings je nach Anforderung der späteren Nutzung, z.B. als Sukzessionsfläche (Unversiegelte Fläche zur Aufnahme von Oberflächenwasser) oder als forstwirtschaftliche Nutzfläche, abgewichen werden kann. Funktionell ist diese Schicht als Begrünungsschicht für die Aufnahme der Pflanzen wichtig.

### Liste der verwendeten Bezugszeichen

1 - Deponiekörper
2 - Profilierungs- und Ausgleichsschicht
3 - Dichtungsschicht
4 - Dränageschicht
5 - filterstabiles Geotextil (bei Bedarf)
6 - Bodenkörper
7 - Rekultivierungsschicht

## Patentansprüche

1. Verfahren zum Schließen von Deponien und Lagerflächen für Rückstände, wobei Mehrschichtenabdeckungen hergestellt werden,
***gekennzeichnet dadurch, dass***
auf einem vorhanden Deponiekörper eine Abdeckung mit nachfolgend genannten Schichtenaufbau sowie den angegebenen Materialzusammensetzungen aufgebracht wird:
- Profilierungs- und Ausgleichsschicht
• Mächtigkeit bis zu 1,5 m
• lagenweiser Einbau mit einer Schichtdicke bis zu 0,5 m
• 25 % bis 45 % Anteile Schotter einer Korngröße von 0 mm bis 65 mm und 35 % bis 55% Anteile gebrochener Betonschwellen einer Korngröße von 0 mm bis 65 mm und 20 % bis 30 % Anteile Splitt einer Korngröße von 2 mm bis 8 mm und 0,1 % bis 30 % Anteile Feingut einer Korngröße von 0 mm bis 8 mm
- Bodenkörper
• Mächtigkeit bis zu 3,0 m
• lagenweiser Einbau mit einer Schichtdicke von bis zu 0,30 m
• 0,1 % bis 25 % Anteile Schotter einer Korngröße von 0 mm bis 65 mm und 0,1 % bis 25 % Anteile gebrochener Betonschwellen einer Korngröße von 0 mm bis 65 mm und 20 % bis 40 % Anteile Splitt einer Korngröße von 2 mm bis 8 mm und 35 % bis 45 % Anteile Feingut einer Korngröße von 0 mm bis 8 mm (kornabgestuftes Material)
- Rekultivierungsschicht
• Mächtigkeit bis zu 0,5 m
• Organikanteil max. 5,0 %
• 0,1 % bis 10 % Anteile Schotter einer Korngröße von 0 mm bis 65 mm und 0,1 % bis 10 % Anteile gebrochener Betonschwellen einer Korngröße von 0 mm bis 65 mm und 20 % bis 40 % Anteile Splitt einer Korngröße von 2 mm bis 8 mm und 45 % bis 55 % Anteile Feingut einer Korngröße von 0 mm bis 8 mm, wobei alle Schichten aus einem Gemisch von jeweils in der Korngröße und den Anteilen variabel an die Gegebenheit anpassbaren Materialien bestehend aus
• Schotter eines Bahnkörpers
• gebrochenen Betonschwellen einer Schienenkonstruktion
• Splittanteilen eines Schotterrecyclingprozesses und
• Feingutanteilen des Schotterrecyclingprozesses
hergestellt werden.

2. Verfahren nach Anspruch 1, ***gekennzeichnet dadurch, dass*** bedarfsweise zusätzlich eine Dränageschicht und/oder eine Dichtungsschicht und/oder ein Geotextil in Abhängigkeit der Standortgegebenheiten und der Deponieklasse zwischen dem Bodenkörper und der Profilierungs- und Ausgleichsschicht eingebaut wird.

3. Verfahren nach Anspruch 2, ***gekennzeichnet dadurch, dass*** bedarfsweise ein filterstabiles Geotextil mit einer wirksamen öffnungsweite O₉₀ in Abhängigkeit der verwendeten Materialien eingebaut wird.

4. Verfahren nach Anspruch 2 und 3, ***gekennzeichnet dadurch, dass*** die Dränageschicht als Flächenfilter unter dem Geotextil mit folgenden Eigenschaften eingebaut wird:
• Korngröße 16/32 mm oder alternativ 8/16 mm
• Mächtigkeit 0,30 m
• Kalkgehalt max. 20 Gew. -%

5. Verfahren nach Anspruch 2 bis 4, ***gekennzeichnet dadurch, dass*** die Dichtungsschicht unterhalb des Flächenfilters vorzugsweise in einem Zweikomponentensystem aus einem Dickschichtsystem und einem Dünnschichtsystem (bestehend aus einer mineralischen Dichtung und einer Kunststoffdichtungsbahn) eingebaut wird, wobei ein(e)
• Größtkorn von 32 mm
• Mächtigkeit bis 0,75 m
• Kalkgehalt max. 15 Gew.-%
• Organikanteil von max. 5,0 %
• Wasserdurchlässigkeitsbeiwert kf ≤ 5 x 10⁻⁹ m/s verwendet/eingestellt wird.

6. Verfahren nach Anspruch 5, ***gekennzeichnet dadurch, dass*** das Dickschichtsystem
• in Ausführung als Wasserhaushaltsschicht oder
• in Ausführung als Kapillarsperre eingebaut wird.

7. Verfahren nach Anspruch 5, ***gekennzeichnet dadurch, dass*** das Dünnschichtsystem
• in Ausführung als mineralisches Dünnschichtsystem und/oder
• in Ausführung als polymeres Element eingebaut wird.

8. Verfahren nach Anspruch 2 und 4, ***gekennzeichnet dadurch, dass*** die Dränageschicht aus 50 % bis 100 % Anteilen Schotter einer Korngröße von 16 mm bis 32 mm oder 8 mm bis 16 mm und 0,1 % bis 50 % Anteilen gebrochener Betonschwellen einer Korngröße von 16 mm bis 32 mm oder 8 mm bis 16 mm und 0,1 % bis 10 % Anteilen Splitt einer Korngröße von 2 mm bis 8 mm und 0,1 % bis 5 % Anteilen Feingut einer Korngröße von 0 mm bis 8 mm hergestellt wird.

9. Verfahren nach Anspruch 2 und 4, ***gekennzeichnet dadurch, dass*** die Dichtungsschicht aus 0,1 % bis 5 % Anteilen Schotter einer Korngröße von 0 mm bis 65 mm und 0,1 % bis 5 % Anteilen gebrochener Betonschwellen einer Korngröße von 0 mm bis 65 mm und 0,1 % bis 30 % Anteilen Splitt einer Korngröße von 2 mm bis 8 mm und 60 % bis 100 % Anteilen Feingut einer Korngröße von 0 mm bis 8 mm (kornabgestuftes Material) hergestellt wird.

10. Verfahren nach Anspruch 1, ***gekennzeichnet dadurch, dass*** in die Rekultivierungsschicht max. 25 % kompostierte Klärschlämme in Abhängigkeit von den Standortgegebenheiten und max. 10% sonstige Kompostanteile bei Einhaltung der Forderung hinsichtlich Organikanteil ≤5 % eingemischt werden.

11. Verfahren nach Anspruch 2, ***gekennzeichnet dadurch, dass*** die Dichtungsschicht mit mineralischem Material der Korngröße 0 mm bis 4 mm in Verbindung mit Tonmehl (Bentonit) und/oder mit einer polymeren Komponente (Kunststoffdichtungsbahn) und/oder mit einer geosynthetischen Dichtung (Bentonitmatte) ausgeführt wird.

## Claims

1. A method for covering landfills and refuse storage areas, in which multilayer covers are produced,
**characterized in that**
a cover with the layered structure described below as well as the cited material compositions is applied onto an existing landfill body:
- Profiling and compensating layer
• thickness up to 1.5 m
• layer-by-layer application with a layer thickness up to 0.5 m
• 25% to 45% gravel ballast with a grain size between 0 mm and 65 mm and 35% to 55% crushed concrete ties with a grain size between 0 mm and 65 mm and 20% to 30% ballast chippings with a grain size between 2 mm and 8 mm and 0.1 % to 30% fines with a grain size between 0 mm and 8 mm
- Soil body
• thickness up to 3.0 m
• layer-by-layer application with a layer thickness up to 0.30 m
• 0.1 % to 25% gravel ballast with a grain size between 0 mm and 65 mm and 0.1 % to 25% crushed concrete ties with a grain size between 0 mm and 65 mm and 20% to 40% ballast chippings with a grain size between 2 mm and 8 mm and 35% to 45% fines with a grain size between 0 mm and 8 mm (grain-graded material)
- Recultivation layer
• thickness up to 0.5 m
• 5.0 % maximum organic fraction
• 0.1 % to 10% gravel ballast with a grain size between 0 and 65 mm and 0.1 % to 10% crushed concrete ties with a grain size between 0 mm and 65 mm and 20% to 40% ballast chippings with a grain size between 2 mm and 8 mm and 45% to 55% fines with a grain size between 0 mm and 8 mm,
wherein all layers consist of a mixture of the following materials that can be variably adapted to the respective circumstances with respect to their grain size and fractions:
• gravel ballast of a subgrade
• crushed concrete ties of a rail construction
• ballast chippings fractions of a gravel ballast recycling process and
• fines fractions of the ballast recycling process.

2. The method according to claim 1, **characterized in that** a drainage layer and/or a sealing layer and/or a geotextile is installed, if so required, between the soil body and the profiling and compensating layer depending on the circumstances at the landfill site and the landfill class.

3. The method according to claim 2, **characterized in that** a filter-stable geotextile with an effective aperture width O₉₀ is installed depending on the materials used.

4. The method according to claim 2 and 3, **characterized in that** the drainage layer is installed underneath the geotextile in the form of a surface filter with the following properties:
• grain size 16/32 mm or, alternatively, 8/16 mm
• thickness 0.30 m
• maximum clay content 20 wt.%.

5. The method according to claims 2-4, **characterized in that** the sealing layer is installed underneath the surface filter, preferably in the form of a two-component system that is composed of a thick-layer system and a thin-layer system (consisting of a mineral seal and a plastic liner), wherein a
• maximum grain size of 32 mm
• thickness up to 0.75 m
• maximum clay content of 15 wt.%
• maximum organic fraction of 5.0% and
• water permeability coefficient kf ≤ 5 x 10⁻⁹ m/s is used/adjusted.

6. The method according to claim 5, **characterized in that** the thick-layer system is installed
• in the form of a water economy layer or
• in the form of a capillary barrier.

7. The method according to claim 5, **characterized in that** the thin-layer system is installed
• in the form of a mineral thin-layer system and/or
• in the form of a polymer element.

8. The method according to claims 2 and 4, **characterized in that** the drainage layer is produced from 50% to 100% gravel ballast with a grain size between 16 mm and 32 mm or between 8 mm and 16 mm and 0.1 % to 50% crushed concrete ties with a grain size between 16 mm and 32 mm or between 8 mm and 16 mm and 0.1% to 10% ballast chippings with a grain size between 2 mm and 8 mm and 0.1% to 5% fines with a grain size between 0 mm and 8 mm.

9. The method according to claims 2 and 4, **characterized in that** the sealing layer is produced from 0.1 % to 5% gravel ballast with a grain size between 0 mm and 65 mm and 0.1% to 5% crushed concrete ties with a grain size between 0 mm and 65 mm and 0.1 % to 30% ballast chippings with a grain size between 2 mm and 8 mm and 60% to 100% fines with a grain size between 0 mm and 8 mm (grain-graded material).

10. The method according to claim 1, **characterized in that** no more than 25% composted sewage sludges are admixed to the recultivation layer in dependence on the circumstances at the landfill site and no more than 10% of other compost fractions may be admixed to the recultivation layer with consideration of the requirement for an organic fraction ≤ 5%.

11. The method according to claim 2, **characterized in that** the sealing layer is produced with a mineral material that has a grain size between 0 mm and 4 mm in connection with powdered clay (bentonite) and/or with a polymer component (plastic liner) and/or with a geosynthetic seal (bentonite mat).

## Revendications

1. Procédé de fermeture de décharges et de surfaces de stockage pour résidus, dans lequel plusieurs recouvrements multicouches sont réalisés,
**caractérisé en ce que**,
sur un corps de décharge existant, on applique un recouvrement ayant la structure de couches indiquée ci-après ainsi que les compositions matérielles mentionnées :
- couche de profilage et de compensation
• épaisseur jusqu'à 1,5 m
• intégration par couches avec une épaisseur de couche allant jusqu'à 0,5 m
• contenant 25 % à 45 % de ballast d'une granulométrie de 0 mm à 65 mm et 35 % à 55 % de brisures de poutres en béton d'une granulométrie de 0 mm à 65 mm et 20 % à 30 % de gravillons d'une granulométrie de 2 mm à 8 mm et 0,1 % à 30 % de fines d'apport d'une granulométrie de 0 à8mm
- corps de sol
• épaisseur jusqu'à 3,0 m
• intégration par couches avec une épaisseur de couche allant jusqu'à 0,30 m
• contenant 0,1 % % à 25 % de ballast d'une granulométrie de 0 mm à 65 mm et 0,1 % à 25 % de brisures de poutres en béton d'une granulométrie de 0 mm à 65 mm et 20 % à 40 % de gravillons d'une granulométrie de 2 mm à 8 mm et 35 % à 45 % de fines d'apport d'une granulométrie de 0 à 8 mm (matière à grains échelonnés)
- couche de reculture
• épaisseur jusqu'à 0,5 m
• proportion de matière organique 5,0 %
• contenant 0,1 % % à 10 % de ballast d'une granulométrie de 0 mm à 65 mm et 0,1 % à 10 % de brisures de poutres en béton d'une granulométrie de 0 mm à 65 mm et 20 % à 40 % de gravillons d'une granulométrie de 2 mm à 8 mm et 45 % à 55 % de fines d'apport d'une granulométrie de 0 à 8 mm,
toutes les couches étant réalisées à partir d'un mélange de matériaux adaptables de manière variable aux conditions données respectivement en granulométrie et en proportions et composé de :
• ballast de corps ferroviaire
• brisures de poutres en béton d'une construction ferroviaire
• gravillons d'un processus de recyclage de ballast et
• fines d'apport du processus de recyclage de ballast.

2. Procédé selon la revendication 1, **caractérisé en ce qu'**on intègre en cas de besoin en plus une couche de drainage et/ou une couche d'étanchéité et/ou un géotextile en fonction des données de l'emplacement et de la classe de décharge entre le corps de sol et la couche de profilage et de compensation.

3. Procédé selon la revendication 2, **caractérisé en ce qu'**on intègre en cas de besoin un géotextile stable au filtrage ayant un orifice d'ouverture utile O₉₀ en fonction des matières utilisées.

4. Procédé selon les revendications 2 et 3, **caractérisé en ce que** la couche de drainage est intégrée sous forme de filtre de surface sous le géotextile en ayant les propriétés suivantes :
• granulométrie 16/32 mm ou en alternative 8/16 mm
• épaisseur 0,30 m
• proportion de chaux 20 % en poids maximum

5. Procédé selon les revendications 2 à 4, **caractérisé en ce que** la couche d'étanchéité est intégrée sous le filtre de surface de préférence dans un système à deux composants composé d'un système à couches épaisses et d'un système à couches minces (composé d'une étanchéité minérale et d'une bande de joint en matière plastique), dans lequel on utilise/fixe
• des grains d'une taille maximale de 32 mm
• une épaisseur allant jusqu'à 0,75 m
• une proportion de chaux maximale de 15 % en poids
• une proportion de matière organique de 5,0 % au maximum
• un coefficient de perméabilité à l'eau kf ≤ 5 x 10⁻⁹ m/s.

6. Procédé selon la revendication 5, **caractérisé en ce que** le système à couches épaisses est intégré sous forme
• d'une couche de rétention d'eau ou
• d'un barrage capillaire.

7. Procédé selon la revendication 5, **caractérisé en ce que** le système à couches minces est intégré sous forme
• d'un système minéral à couches minces et/ou
• d'un élément en polymère.

8. Procédé selon les revendications 2 et 4, **caractérisé en ce que** la couche de drainage est composée de 50 % à 100 % de ballast d'une granulométrie allant de 16 mm à 32 mm ou de 8 mm à 16 mm et 0,1 à 50 % de brisures de poutres en béton d'une granulométrie allant de 16 mm à 32 mm ou de 8 mm à 16 mm et 0,1 % à 10% de gravillons d'une granulométrie allant de 2 mm à 8 mm et 0,1 % à 5,0 % de fines d'apport d'une granulométrie allant de 0 mm à 8 mm.

9. Procédé selon les revendications 2 et 4, **caractérisé en ce que** la couche d'étanchéité est composée de 0,1 % à 5 % de ballast d'une granulométrie allant de 0 mm à 65 mm et 0,1 à 5 % de brisures de poutres en béton d'une granulométrie allant de 0 mm à 65 mm et 0,1 % à 30% de gravillons d'une granulométrie allant de 2 mm à 8 mm et 60 % à 100 % de fines d'apport d'une granulométrie allant de 0 mm à 8 mm (matière à grains échelonnés).

10. Procédé selon la revendication 1, **caractérisé en ce que**, dans la couche de reculture, sont mélangés au maximum 25 % de boues d'épuration en compost en fonction des données de l'emplacement et au maximum 10 % d'autres composts en respectant la prescription au niveau de la proportion de matière organique ≤ 5 %.

11. Procédé selon la revendication 2, **caractérisé en ce que** la couche d'étanchéité est réalisée avec de la matière minérale d'une granulométrie de 0 mm à 4 mm en liaison avec de la poudre d'argile (bentonite) et/ou un composant de polymère (bande de joint en matière plastique) et/ou avec un joint géosynthétique (nappe de bentonite).
